# EUROPÄISCHE PATENTANMELDUNG

(11) **EP 4 484 208 A1**
(43) Veröffentlichungstag der Anmeldung: **01.01.2025**
(21) Anmeldenummer: 24174380.6
(22) Anmeldetag: 06.05.2024
(51) Int. Cl.: B60L 53/14, B60L 53/30, B60L 53/65, B60L 53/66, H02J 7/00, H05K 5/00, H05K 7/14

(54) **WANDLADESTATION FÜR ELEKTROFAHRZEUGE**

(30) Priorität: 27.06.2023 DE 102023116937
(71) Anmelder: Juice Technology AG, 8184 Bachenbülach (CH)
(72) Erfinder: ERNI, Christoph, 8184 Bachenbülach (CH)
(74) Vertreter: Caspary, Karsten

(57) **Zusammenfassung**

Die Erfindung betrifft eine Wandladestation (2) zum Aufladen von Batterien in Elektrofahrzeugen, mit einem Gehäuse (4) umfassend ein Gehäuse-Basisteil (6) und ein Gehäuse-Abdeckteil (8), wobei das Gehäuse (4) einen Aufnahmeraum für elektrische Komponenten der Wandladestation (2) definiert, einer ersten Leiterplatte (46), die mindestens eine Einrichtung (52) zur Steuerung der Wandladestation (2) aufweist, einer zweiten Leiterplatte (48), die mindestens ein Leistungselektronik-Einrichtung (54) aufweist, einer dritten Leiterplatte (50), die eine Anzeigeeinrichtung (56) und eine RFID-Antenne (58) aufweist, und einer Zählereinrichtung (24) zur Erfassung des Stromverbrauchs während des Ladevorgangs, wobei in dem Aufnahmeraum die erste Leiterplatte (46), die zweite Leiterplatte (48) und die dritte Leiterplatte (50) der Reihe nach übereinander beabstandet angeordnet sind, wobei die zweite Leiterplatte (48) einen ersten Schenkel (64) und einen zum ersten Schenkel (64) parallelen zweiten Schenkel (66) sowie einen ersten Verbindungsabschnitt (68) zwischen dem ersten Schenkel (64) und dem zweiten Schenkel (68) aufweist, sodass sich in Richtung vom Gehäuse-Abdeckteil (8) zum Gehäuse-Basisteil (6) betrachtet ein Abschnitt der ersten Leiterplatte (46) zwischen den Schenkelabschnitten erstreckt, und die dritte Leiterplatte (50) derart angeordnet ist, dass sie den ersten Verbindungsabschnitt (68) der zweiten Leiterplatte (48) überlappt, und wobei die Zählereinrichtung (24) zwischen dem ersten Schenkel (64) und dem zweiten Schenkel (66) der zweiten Leiterplatte (48) angeordnet ist.

## Beschreibung

Die vorliegende Erfindung betrifft eine Wandladestation zum Aufladen von Batterien in Elektrofahrzeugen, insbesondere in Elektroautos.

Wandladestationen sind für die Anbringung vor Ort an einer Wand, einer Säule, oder dergleichen vorgesehene Ladestationen für Batterie-Elektrofahrzeuge (BEV), wie etwa Elektroautos. Wandladestationen sind sowohl für den öffentlichen als auch den privaten Bereich konzipiert. Die Funktion einer Wandladestation ist es, eine Anschlussmöglichkeit für zu ladenden Elektrofahrzeuge bereitzustellen. Üblicherweise umfasst eine Ladestation Anschlüsse für ein oder mehrere ankommende Kabel, um elektrische Energie aus einem Stromnetz aufzunehmen, Anschlüsse für ein oder mehrere abgehende Kabel, um die in einem Leistungselektronikabschnitt bereitgestellten Ladeleistung einer zu ladenden Batterie zuzuführen, und Anschlüsse für Steuerkabel.

Zum elektrischen Verbinden zwischen Wandladestation und Elektrofahrzeug kommen üblicherweise spezielle Ladekabel zum Einsatz, die in der Lage sind, sowohl den Ladestrom zuzuführen als auch die Kommunikation zwischen der Wandladestation und der Ladeelektronik des zu ladenden Elektrofahrzeugs zu ermöglichen.

In Wandladestationen verbaute elektrische Komponenten können Schutzschalter, Steuereinrichtungen, Wandler-Einrichtungen, Zählereinrichtungen, Anzeigeeinrichtungen, etc. sein.

Mit der zunehmenden Verbreitung von Wandladestationen wird jedoch auch der Platzbedarf von Wandladestationen zunehmend zu einer Herausforderung für die Konstrukteure von Wandladestationen. Darüber hinaus steht für die Montage von Wandladestationen dem Montagepersonal wenig Zeit zur Verfügung.

Es ist daher die Aufgabe der vorliegenden Erfindung, eine Wandladestation für Elektrofahrzeuge bereitzustellen, die einen kompakten, modularen Aufbau hat, auf einfache Weise herzustellen sowie für elektrisches Fachpersonal mit geringem Aufwand anschließbar ist.

Diese Aufgabe wird durch die Merkmale des Anspruchs 1 gelöst.

Erfindungsgemäß wird eine Wandladestation zum Aufladen von Batterien in Elektrofahrzeugen bereitgestellt, mit einem Gehäuse umfassend ein Gehäuse-Basisteil und ein Gehäuse-Abdeckteil, wobei das Gehäuse einen Aufnahmeraum für elektrische Komponenten der Wandladestation definiert, einer ersten Leiterplatte, die mindestens eine Einrichtung zur Steuerung der Wandladestation aufweist, einer zweiten Leiterplatte, die mindestens eine Leistungselektronik-Einrichtung aufweist, einer dritten Leiterplatte, die eine Anzeigeeinrichtung und eine RFID-Antenne aufweist, und einer Zählereinrichtung zur Erfassung des Stromverbrauchs während des Ladevorgangs, wobei in dem Aufnahmeraum die erste Leiterplatte, die zweite Leiterplatte und die dritte Leiterplatte der Reihe nach übereinander beabstandet angeordnet sind, wobei die zweite Leiterplatte einen ersten Schenkel und einen zum ersten Schenkel parallelen zweiten Schenkel sowie einen ersten Verbindungsabschnitt zwischen dem ersten Schenkel und dem zweiten Schenkel aufweist, sodass sich in Richtung vom Gehäuse-Abdeckteil zum Gehäuse-Basisteil betrachtet ein Abschnitt der ersten Leiterplatte zwischen den Schenkelabschnitten erstreckt, und die dritte Leiterplatte derart angeordnet ist, dass sie den Verbindungsschenkel der oberen Leiterplatte überlappt, und wobei die Zählereinrichtung zwischen dem ersten Schenkel und dem zweiten Schenkel der zweiten Leiterplatte angeordnet ist.

Es hat sich gezeigt, dass die für eine Wandladestation benötigten Komponenten bei der erfindungsgemäßen Anordnung der Leiterplatten und bei der erfindungsgemäßen Zuordnung von Bauelementen nur einen geringen Platzverbrauch haben. Dementsprechend wird ein verringerter Aufnahmeraum für die Komponenten benötigt. Dabei schafft der kompaktere Aufbau innerhalb des Gehäuses einen Spielraum zur Reduzierung der Gehäuseabmessungen bei gleichbleibendem Luftraum für die Konvektion im Gehäuseinnern, sodass die Wärmeabfuhr trotz der kompakteren Anordnung und der kleineren Gehäuseabmessungen aufrechterhalten werden kann. Weiterhin hat sich gezeigt, dass die Ausgestaltung der zweiten Leiterplatte mit den beiden Schenkeln und einem Verbindungsabschnitt ausreichend Platz für die Aufnahme einer Zählereinrichtung zwischen den Schenkeln schafft. Zudem ist der Aufbau klar strukturiert und für den Fachmann übersichtlich, wodurch eine Reparatur, gegebenenfalls mit einem Austausch von Bestandteilen, einfach möglich ist. Weiterhin ermöglicht die erfindungsgemäße Anordnung eine automatische Herstellung der Wandladestation, beispielsweise durch Bestückungsroboter in einer automatisierten Fertigungsabfolge. Die erfindungsgemäße Anordnung ermöglicht so in der Draufsicht auf die Wandladestation gleichzeitig den Zugriff auf alle Anschlüsse der Leiterplatten sowie auf alle Anzeigen, wobei darüber hinaus die elektronischen Komponenten vor Beschädigungen, insbesondere vor elektrostatischen Entladungen (ESD), geschützt sind.

Vorzugsweise ist die erste Leiterplatte in einem zentralen Bereich in dem Gehäuse angeordnet, sodass sich in Richtung vom Gehäuse-Abdeckteil zum Gehäuse-Basisteil betrachtet ein Abschnitt der ersten Leiterplatte zwischen den Schenkeln der zweiten Leiterplatte erstreckt. Hierdurch ist es möglich, eine elektrische Einrichtung, wie etwa ein Zählereinrichtung, an der ersten Leiterplatte derart anzuordnen, dass sie sich zwischen den Schenkeln der zweiten Leiterplatte erstreckt. Folglich können größere elektrische Komponenten verwendet werden, wie z. B. ein eichrechtskonformer Stromzähler. Sofern die erste Leiterplatte auch eine gegenüber dem Querschnitt des Gehäuses geringere Flächenausdehnung aufweist, wird in dem Gehäuseinneren um die erste Leiterplatte herum ausreichend Luftraum geschaffen, der die Konvektion im Gehäuseinneren begünstigt. Durch die Konvektion im Gehäuseinneren kann die erwärmte Luft an der Innenseite des Gehäuses entlang strömen, sodass die Wärme über das Gehäuse wirksam nach außen abgeführt werden kann.

In weiterer vorteilhafter Ausgestaltung kann die Zählereinrichtung an der ersten Leiterplatte angeordnet sein. In diesem Fall kann das Anordnen der Zählereinrichtung an der ersten Leiterplatte bei der Fertigung in vorteilhafter Weise bereits erfolgen, noch bevor die bestückte Leiterplatte in dem Gehäuseraum montiert wird. Hierdurch wird der Fertigungsablauf noch einmal vereinfacht. Ein weiterer Vorteil besteht darin, dass sich die Zählereinrichtung von der ersten Leiterplatte aus zwischen den beiden Schenkeln der zweiten Leiterplatte über die gesamte Höhe des Gehäuses bis hin zum Gehäuse-Abdeckteil erstrecken kann.

Alternativ kann die Zählereinrichtung an dem Gehäuse gehalten sein. Hierbei wird z. B. über eine Querschiene, die im Gehäuseinneren zwischen den Seitenwänden des Gehäuse-Basisteils angeordnet ist, eine Montagemöglichkeit für die Zählereinrichtung geschaffen. Mit Vorteil kann die Zählereinrichtung zur Fixierung auf die Querschiene geklickt werden. In diesem Fall erfolgt die Montage der Zählereinrichtung bevor oder nachdem die zweite Leiterplatte in dem Gehäuse montiert wurde.

Nach einer weiteren bevorzugten Ausgestaltung umfasst die Zählereinrichtung eine Anzeigeeinrichtung und das Gehäuse-Abdeckteil ein Sichtfenster. Dementsprechend ist die Anzeigeeinrichtung von außen sichtbar. Die Größe des Sichtfensters kann auf die Fläche der Anzeige abgestimmt sein, so dass die Anzeige nicht nur frontal von vorne, sondern auch von der Seite abgelesen werden kann.

Es ist weiterhin bevorzugt, dass die Anzeigeeinrichtung als ein Fortschrittsbalken vorgesehen ist, insbesondere bestehend aus einer LED-Leiste, wobei in dem Gehäuse-Abdeckteil ein Sichtfenster vorgesehen ist. Dementsprechend ist der Fortschrittsbalken von außen sichtbar. Andere Ausbildungen der Anzeigeeinrichtung sind möglich, beispielsweise runde oder ovale Formen, alternativ reine Zahlendarstellungen in Prozent oder unterschiedliche Farbendarstellungen für verschiedene Zustände.

Mit weiterem Vorteil sind an der ersten Leiterplatte Anschlusseinrichtungen, insbesondere eine Ethernet-Schnittstelle und/oder eine USB-Schnittstelle und/oder eine Anschlusseinrichtung für die Stromversorgung, vorgesehen, und an der zweiten Leiterplatte Anschlusseinrichtungen für Netz- und BEV-Ladekabel vorgesehen. Auch andere Schnittstellen können auf der ersten Leiterplatte mit Anschlusseinrichtungen angeordnet sein. Die Netz- und BEV-Ladekabel und die Leistungselektronik-Einrichtung befinden sich auf derselben Leiterplatte, sodass die Anzahl von Verbindungskabel im Gehäuseinneren verringert werden kann.

Darüber hinaus ist es von Vorteil, wenn die Anschlusseinrichtungen für Netz- und BEV-Ladekabel jeweils an den freien Enden des ersten Schenkels und/oder des zweiten Schenkels angeordnet sind. In diesem Fall befinden sich die freien Enden des ersten und/oder zweiten Schenkel im Bereich der Kabeldurchlässe des Gehäuses, sodass ein Anschließen/Verdrahten der Wandladestation unmittelbar in einem Bereich erfolgen kann, in dem die Kabel durch die Gehäusewand hindurch in das Gehäuseinnere gelangen.

Schließlich ist es von Vorteil, wenn an der dritten Leiterplatte eine Anschlusseinrichtung für die Stromversorgung und zum Verbinden mit den Einrichtungen zur Steuerung der Wandladestation vorgesehen sind. Diese Anschlusseinrichtungen für die dritte Leiterplatte dienen zum Anschließen von Kommunikations- und Versorgungskabel, wobei die hierbei verwendeten Anschlusseinrichtungen und Kabel aufgrund der geringen Ströme gegenüber den Anschlusseinrichtungen und Kabel für die Leistungselektronikkomponenten weitaus weniger massiv ausgebildet sind. Daher ist das Anschließen dieser Komponenten an der dritten Leiterplatte, die am weitesten von den Kabeldurchlässen und den Kabelverschraubungen entfernt ist, mit einem geringen Material- und Arbeitsaufwand verbunden.

Das Gehäuse ist vorzugsweise mit der Außenseite des Gehäuse-Basisteils an einer Montagefläche oder Montageeinrichtung derart anbringbar, dass die Leiterplatten im Wesentlichen vertikal angeordnet sind. Hierdurch ergibt sich eine verbesserte Wärmekonvektion im Inneren des Gehäuses, da die Luft zwischen den Leiterplatten in vertikaler Richtung aufsteigen und somit direkt und wirksam dem Konvektionskreislauf im Gehäuseinneren zugeführt werden kann.

Wenn die zweite Leiterplatte im montierten Zustand derart angeordnet ist, dass der erste Schenkel und der zweite Schenkel nach unten weisen, ergibt sich ein Vorteil insofern, als dass das oder die Zuführkabel für die Energiezufuhr von unten her in das Gehäuse eingeführt werden können, wodurch die Kabel und die Kabelverschraubungen in den Kabeldurchlässen durch das Gehäuse der Wandladestation von oben her, z. B. gegen Witterungseinflüsse wie etwa Regen, geschützt angeordnet sind.

### Kurze Beschreibung der Figuren

Weitere Eigenschaften und Vorteile der vorliegenden Erfindung ergeben sich aus der nachfolgenden Beschreibung unter Bezugnahme auf die Zeichnungen.
- Fig. 1: ist eine Seitenansicht im Schnitt einer erfindungsgemäßen Wandladestation gemäß einer Ausführungsform;
- Fig. 2: ist eine perspektivische Explosionsdarstellung der erfindungsgemäßen Wandladestation in Fig. 1;
- Fig. 3: ist eine perspektivische Seitenansicht der erfindungsgemäßen Wandladestation in den Fig. 1 ohne das Gehäuse-Abdeckteil und mit aufgebrochener Seitenwand;
- Fig. 4: ist eine Vorderansicht der erfindungsgemäßen Wandladestation im an einer Anbringungsfläche montierten Zustand, wobei ein Teil des Gehäuse-Abdeckteils abgenommen ist; und
- Fig. 5: ist eine perspektivische Ansicht der erfindungsgemäßen Wandladestation in Fig. 1 im angebrachten Zustand.

### Ausführliche Beschreibung der Ausführungsform

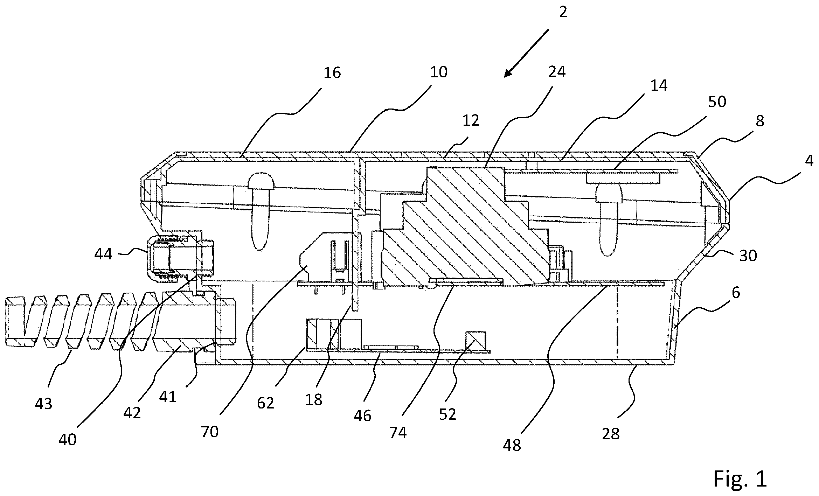

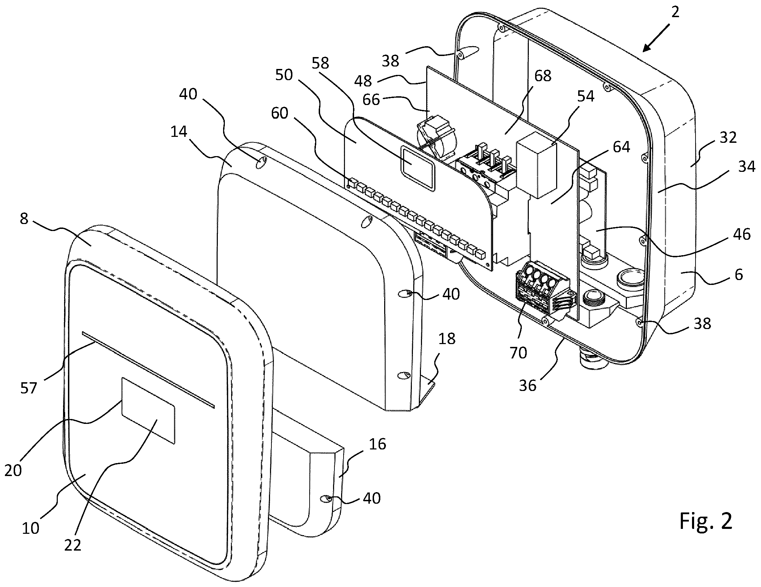

In den Fig. 1 und 2 ist die erfindungsgemäße Wandladestation 2 zum Bereitstellen einer Anschlussmöglichkeit zum Laden der Batterien oder Akkus in einem Elektrofahrzeug gezeigt. Die Wandladestation 2 umfasst ein Gehäuse 4, das ein Gehäuse-Basisteil 6 und ein Gehäuse-Abdeckteil 8 umfasst. Das Gehäuse-Abdeckteil 8 umfasst eine durchgehende Frontplatte 10 zum vollflächigen bzw. durchgehenden Verschließen des Gehäuses 4, und eine darunter angeordnete bzw. zwischen dem Gehäuse-Basisteil 6 und der Frontplatte 10 angeordnete Deckplatte 12. Die Deckplatte 12 umfasst einen ersten Deckplatten-Abschnitt 14 und einen zweiten Deckplatten-Abschnitt 16.

In den Fig. 1 und 2 ist an dem Ende des ersten (oberen) Deckplatten-Abschnitts 14, das dem zweiten (unteren) Deckplatten-Abschnitt 16 zugewandt ist, ein plattenförmiges Element 18 angeordnet, das in etwa um 90° bezüglich der ersten und zweiten Deckplattenabschnitte 16, 18 abgewinkelt ist. Allgemein ausgedrückt ist das plattenförmige Element 18 senkrecht zu dem ersten Deckplatten-Abschnitt 14 angeordnet. Das plattenförmige Element 18 ist vorgesehen, um einen Anschlussbereich, in dem sich Anschlusseinrichtungen von Kabel befinden, von einem Bereich, in dem sich elektrische Komponenten der Wandladestation befinden, räumlich voneinander zu trennen. Hierdurch kann verhindert werden, dass die elektrischen Komponenten beim Anschließen der Wandladestation an das Netz durch das Montagepersonal beschädigt werden. Beide Bereiche weisen daher eigene Abdeckungen auf, die getrennt voneinander befestigt und teilweise abnehmbar sind.

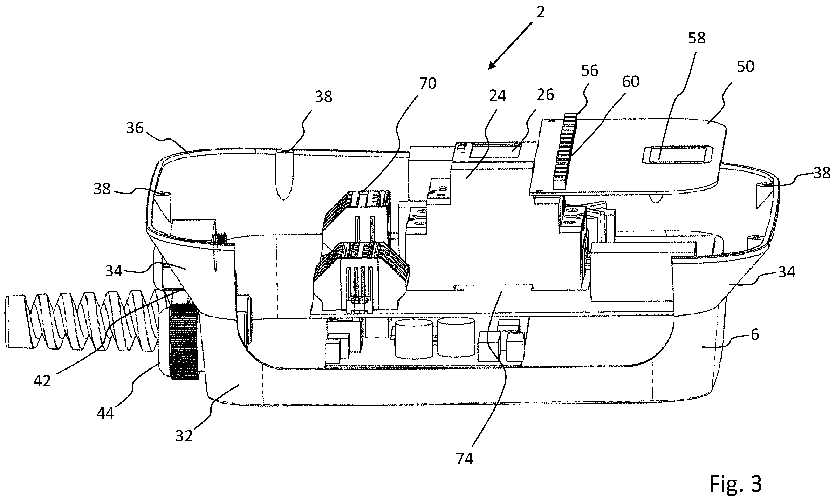

Wie weiter in der Explosionsdarstellung in Fig. 2 gezeigt, weist die Frontplatte 10 in einem zentralen Bereich ein Sichtfenster 20 auf, das durch eine Platte 22 aus Glas oder aus transparentem Kunststoff geschlossen ist. Zumindest der erste Deckplatten-Abschnitt 14 ist vollständig oder teilweise transparent ausgebildet. Hierdurch ist eine in dem Gehäuse 4 angeordnete Anzeigeeinrichtung 26 einer Zählereinrichtung 24, die in Fig. 3 zu sehen ist und die nachfolgend näher beschrieben ist, durch den ersten Deckplatten-Abschnitt 14 und durch das Sichtfenster 20 in der Frontplatte 10 hindurch von außen sichtbar.

Bezugnehmend auf Fig. 1 definiert das Gehäuse-Basisteil 6 den Haupt-Aufnahmeraum der Wandladestation 2 und weist ein Bodenteil 28 und einen umlaufenden Wandabschnitt 30 auf. Der umlaufende Wandabschnitt 30 besteht wiederum aus einem vertikalen oder in etwa vertikalen Wandabschnitt 32 und einem zum vertikalen Wandabschnitt 32 schräg nach außen geneigten Wandabschnitt 34. Der umlaufende Randbereich 36 des geneigten Wandabschnitts 34 ist mit in Umfangsrichtung angeordneten Schraublöchern 38 versehen, während der erste und zweite Deckplattenabschnitt 14 und 16 entsprechende Schraubdurchlässe 40 aufweisen, sodass der erste und zweite Deckplattenabschnitt 14 und 16 an dem Gehäuse-Basisteil 6, insbesondere mit einer (nicht gezeigten) zwischengelegten, bspw. geschäumten Dichtung, wasser- und staubdicht fest verschraubbar ist (IP 54).

Die durchgehende Frontplatte 10 ist in Fig. 1 auf die oberen und unteren Deckplattenabschnitte 14 und 16 aufgesetzt und lediglich unter Formschluss, z. B. mittels Verrastung, gehalten. Es sind jedoch auch andere Befestigungstechniken möglich, wie etwa eine kraftschlüssige Verbindung z. B. mittels Clips oder vergleichbaren Halteelementen.

Das Gehäuse 4 definiert einen Aufnahmeraum für die elektrischen Komponenten der Wandladestation 2. Das in Fig. 1 gezeigte Gehäuse 4 ist in etwa rechteckförmig mit abgerundeten Eckbereichen ausgebildet. Im Gehäuse-Basisteil 6 sind, wie in Fig. 1 gezeigt, zudem an der linken Seitenwand bzw. der unteren Seitenwand, wenn die Wandladestation 2 an einer Montagefläche angebracht ist, Kabeldurchlässe 40, 41 vorgesehen, in denen Kabelverschraubungen 42, 44 zum Durchführen und Fixieren von Versorgungskabel, Ladekabel und Steuerkabel vorgesehen sind. In Fig. 1 ist eine Kabelverschraubung 42 mit Zugentlastung 43 und eine Kabelverschraubung 44 ohne Zugentlastung gezeigt. Im Auslieferungszustand, d. h. vor der Wandmontage und dem elektrischen Anschließen, können die Kabeldurchlässe 40, 41 von leicht entfernbaren Abdeckelementen abgedeckt sein. Beispielsweise sind die Abdeckelemente über dünne Stege mit den Umfangsrändern der Kabeldurchlässe 40, 41 verbunden, die durch Eindrücken auf einfache Weise entfernt werden können.

Der innere Aufbau der Wandladestation 2 ergibt sich aus der Zusammenschau der Darstellungen in den Fig. 1, 2 und 3. In dem Gehäuse 4 der Wandladestation 2 sind drei Leiterplatten, nämlich eine erste Leiterplatte 46, eine zweite Leiterplatte 48, und eine dritte Leiterplatte 50 vorgesehen. Die Leiterplatten 46, 48 und 50 erstrecken sich in den Fig. 1 und 2 parallel zueinander in voneinander beabstandeten Ebenen. Insbesondere sind die Leiterplatten 46, 48 und 50 der Reihe nach übereinander angeordnet. Wenngleich in Fig. 1 die Leiterplatten 46, 48 und 50 in horizontalen Ebenen angeordnet gezeigt sind, erstrecken sich die Leiterplatten 46, 48 und 50 im an einer Montagewand oder Säule befestigten Zustand im Wesentlichen vertikal. Weiterhin erstrecken sich die Leiterplatten 46, 48 und 50 im Wesentlichen parallel zum Bodenteil 28 des Gehäuse-Basisteils 6. In den Abstandsbereichen zwischen der ersten und zweiten Leiterplatte 46 und 48, zwischen der zweiten und dritten Leiterplatte 48 und 50, und der dritten Leiterplatte und der Deckplatte 12 findet sich Raum für die Unterbringung der elektrischen Komponenten.

Wie am besten in Fig. 1 zu sehen, weist die erste Leiterplatte 46 eine Steuereinrichtung 52 zur Steuerung der Wandladestation 2 auf. Die erste Leiterplatte 46 fungiert damit als das Logikboard. Die Steuereinrichtung 52 der Wandladestation 2 kann z. B. einen Mikroprozessor und eine Speichereinrichtung umfassen. Auch andere elektronische bzw. elektrische Bauelemente sind auf der ersten Leiterplatte 46 mögliche, damit die Funktion als Logikboard verwirklicht werden kann.

Wie weiterhin am besten in Fig. 2 zu sehen, weist die zweite Leiterplatte 48 mindestens eine Leistungselektronik-Einrichtung 54 der Wandladestation 2 auf. Bei den Leistungselektronik-Einrichtungen kann es sich um Wandler-, Schalter- und Relais-Einrichtungen handeln. Da die Bauelemente der ersten Leiterplatte 46 sich funktional von den Bauelementen der zweiten Leiterplatte 48 unterscheiden, ist die räumliche Trennung sehr sinnvoll. Eine gegenseitige Störung durch die Ströme bzw. Spannungen der jeweils anderen Leiterplatte kann so im Wesentlichen ausgeschlossen werden.

Wie am besten in Fig. 3 zu sehen ist, weist die dritte Leiterplatte 50 eine Anzeigeeinrichtung 56 und eine RFID-Antenne 58 auf. Die Anzeigeeinrichtung 56 besteht aus einem Fortschrittsbalken, der von einer LED-Leiste 60 gebildet wird. Die RFID-Antenne 58 (Radio Frequency Identification) dient der Identifizierung des Benutzers der Wandladestation. Die RFID-Antenne 58 arbeitet mit einem entsprechenden Lesegerät in einem Elektrofahrzeug zusammen, um eine RFID-Freigabe zu ermöglichen, nachdem eine Authentifizierung für einen Ladestation-Benutzer durch den Ladestationsbetreiber erfolgt ist. Mit der Verwendung einer RFID-Karte, eines RFID-Tags oder einem anderen geeigneten RFID-Identifikationselement ist es zudem möglich, den Bezug von Energie mehreren Benutzern zuzuordnen und eine personenbezogene oder fahrzeugbezogene Abrechnung zu erstellen.

Wie darüber hinaus aus der Zusammenschau der Fig. 1 und 2 ersichtlich, sind die Leiterplatten 46, 48 und 50 derart ausgebildet und übereinander beabstandet angeordnet, dass sich die Leiterplatten stets nur teilweise überlappen, und zwar derart, dass in Bereichen, in denen sich die Leiterplatten 46, 48 und 50 nicht überlappen, zusätzliche Raumhöhen zur Unterbringung von größeren bzw. höheren Komponenten, wie etwa der Zählereinrichtung 24, geschaffen wird.

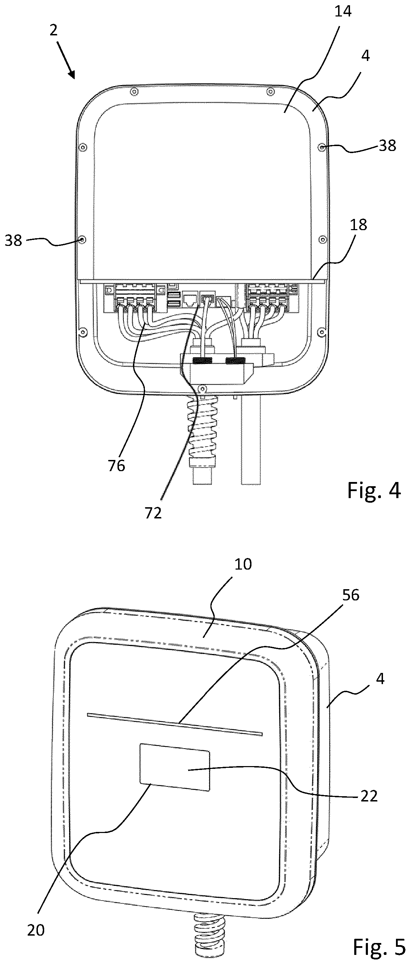

Im Speziellen ist die erste Leiterplatte 46 in etwa rechteckförmig gebildet und in dem Gehäuse 4 zentral, jedoch weiter in Richtung der Kabeldurchlässe 40, 41 hin angeordnet. In Fig. 1 sind an dem linken Endabschnitt bzw. an dem den Kabeldurchlässen 41 zugewandten Endabschnitt der ersten Leiterplatte 46 Anschlusseinrichtungen 62 für die Verdrahtung der Kabel angeordnet. Zusätzlich sind an der ersten Leiterplatte 46, wie in Fig. 4 gezeigt, Anschlusseinrichtungen 72 vorgesehen, insbesondere mindestens eine Ethernet-Schnittstelle, mindestens eine USB-Schnittstelle, und mindestens eine Anschlusseinrichtung für die Stromversorgung. Die Flächenausdehnung der ersten Leiterplatte 46 in der Ebene beträgt in der dargestellten Ausführungsform etwa 25% bis 50% der Flächenausdehnung des Bodenteils 28 des Gehäuses 4.

Die zweite Leiterplatte 48 umfasst, wie in Fig. 2 gezeigt, einen ersten Schenkel 64 und einen zum ersten Schenkel 64 parallelen zweiten Schenkel 66 sowie einen ersten Verbindungsabschnitt 68 zwischen dem ersten Schenkel 64 und dem zweiten Schenkel 66. Der Verbindungsabschnitt 68 ist derart vorgesehen, dass die Leiterplatte 48 etwa die Form eines U aufweist, in Fig. 2 als verkehrt herum angeordnetes U erkennbar. An der zweiten Leiterplatte 48 sind Anschlusseinrichtungen 70 für Netz- und BEV-Ladekabel vorgesehen. Insbesondere sind die Anschlusseinrichtungen 70 für Netz- und BEV-Ladekabel jeweils an den freien Enden des ersten Schenkels 64 und/oder des zweiten Schenkels 66 angeordnet. Folglich sind in Fig. 1 die Anschlusseinrichtungen 70 für Netz- und BEV-Ladekabel an den den Kabeldurchlässen 40, 41 zugewandten freien Enden der Schenkel 64, 66 angeordnet.

Die dritte Leiterplatte 50 ist in etwa rechteckförmig gebildet und ist in dem Gehäuse 4 hin zu dem Ende angeordnet, das den Kabeldurchlässen 40, 41 gegenüberliegt. In Fig. 1 sind an dem linken Endabschnitt bzw. an dem den Kabelverschraubungen 42, 44 zugewandten Endabschnitt der dritten Leiterplatte 50 (nicht gezeigte) Anschlusseinrichtungen für Kabel, insbesondere Anschlusseinrichtung für die Stromversorgung und zum Verbinden mit den Einrichtungen 52 zur Steuerung der Wandladestation 2 vorgesehen. Darüber hinaus befindet sich an der dritten Leiterplatte 50 eine Anzeigeeinrichtung 56 z. B. zum Anzeigen des Ladefortschritts, die von der LED-Leiste 60 zur Implementierung eines Fortschrittsbalkens gebildet wird. Der Fortschrittsbalken erstreckt sich in Querrichtung des Gehäuses 4 und ist, wie in Fig. 2 gezeigt, durch ein Sichtfenster 57 in der Frontplatte 10 von außen sichtbar. Weiterhin ist an der dritten Leiterplatte 50 die RFID-Antenne 58 angeordnet. Die Flächenausdehnung der dritten Leiterplatte in der Ebene beträgt in der hier dargestellten Ausführungsform etwa 20% bis 40% der Flächenausdehnung des Bodenteils 28 des Gehäuses 4. Auch andere Flächenverhältnisse sind hier möglich. Auch die Anzeigeeinrichtung 56 kann anders als ein Fortschrittsbalken ausgebildet sein, z. B. als Ring, Kreis, Säule oder dergleichen.

Zur elektrischen Verbindung der ersten, zweiten und dritten Leiterplatte 46, 48, 50 bzw. der elektrischen Komponenten an der ersten, zweiten und dritten Leiterplatte 46, 48, 50 kommen dort, wo es möglich ist, vorzugsweise (nicht gezeigte) Flachbandkabel zum Einsatz, die einen sehr geringen Platzbedarf aufweisen.

Die Montage der einzelnen Leiterplatten in dem Gehäuse erfolgt vorzugsweise über eine Klickverbindung, sodass die Montage auch robotergestützt erfolgen kann. Dazu weisen die entsprechenden Gehäuseteile geeignete Vorsprünge und/oder Ausnehmungen auf, in die komplementäre Elemente der Leiterplatten eingreifen, um so eine feste, vorzugsweise wieder lösbare Verbindung zu schaffen.

Bei der Zählereinrichtung 24 zur Erfassung des Stroms, der beim Ladevorgang von der Wandladestation 2 abgegangen ist, handelt es sich in der dargestellten Ausführungsform um einen eichrechtskonformen Zähler (MID), der auch eine Anzeigeeinrichtung 26 umfasst, die durch das Sichtfenster 20 und den transparenten ersten Deckplatten-Abschnitt 14 hindurch von außen sichtbar ist. Auch andere Typen von Zählereinrichtungen sind möglich. Wie in den Fig. 1 und 3 gezeigt, umfasst die zweite Leiterplatte 48 einen zweiten Verbindungsabschnitt 74 zwischen dem ersten Schenkel 64 und dem zweiten Schenkel 66. Der zweite Verbindungsabschnitt 74 ist derart vorgesehen, dass die zweite Leiterplatte 48 etwa die Form eines A aufweist. Vorliegend ist die Zählereinrichtung 24 an dem zweiten Verbindungsabschnitt 74 angeordnet. Insbesondere ist die Zählereinrichtung 24 durch eine Einrast-Einrichtung, die an dem Gehäuse der Zählereinrichtung 24 vorgesehen ist, an dem zweiten Verbindungsabschnitt 74 angebracht. Bei der Montage wird die Zählereinrichtung 24 in einfacher Weise auf die zweite Leiterplatte 48 durch eine Klickverbindung befestigt. Die Zählereinrichtung 24 ist üblicherweise mit einer Anzeigeeinrichtung 26 versehen. Alternativ kann die Zählereinrichtung 24 auch ohne eine Anzeigeeinrichtung vorgesehen sein, oder es kann gar keine spezielle Zählereinrichtung vorgesehen sein und stattdessen die Zähler- bzw. Messfunktion von elektrischen Komponenten der Leiterplatten implementiert sein. In diesem Fall kann das Sichtfenster 20 entfallen, sodass die Frontplatte 10 durchgängig lichtundurchlässig ist. Dementsprechend kann in diesem Fall auch der erste Deckplatten-Abschnitt 14 aus einem lichtundurchlässigen Material bestehen.

Bei der Zählereinrichtung 24 mit Anzeigeeinrichtung 26 handelt es sich um einen eichrechtskonformen Stromzähler (MID), der insbesondere dazu eingerichtet ist, den dreiphasigen Ladeverbrauch zu messen, d. h. die Leistungsaufnahme in jeder der drei Phasen. Das Sichtfenster 20 kann in einer Ausführungsform beispielsweise so ausgebildet sein, dass die für MID-Stromzähler vorgeschriebene Identifikationsnummer darin sichtbar ist.

Der erfindungsgemäße Aufbau mit den unterschiedlich geformten Leiterplatten, die jeweils unterschiedliche elektrische Komponenten aufweisen und die einander in bestimmten Abschnitten überlappen, ist für die automatisierte Endmontage besonders geeignet, da unterschiedliche Funktionsgruppen verschiedenen Leiterplatten zugeordnet sind, sodass bei der Endmontage weniger Arbeitsschritte zur Verdrahtung erforderlich sind.

Ein Großteil der Wärme, die in der Wandladestation 2 erzeugt wird, wird von den Leistungselektronik-Einrichtungen 54 abgeben. Mit der erfindungsgemäßen Leiterplatten-Anordnung, bei der die Leistungselektronik-Einrichtungen 54 an der zweiten Leiterplatte 48 angeordnet sind, wie in Fig. 1 gezeigt, ist unterhalb und oberhalb der zweiten Leiterplatte 48 genügend Freiraum bzw. Luftraum vorhanden, der auch frei von Einrichtungen der ersten und dritten Leiterplatte 46 und 50 ist. Dieser Freiraum bzw. Luftraum sorgt für eine ausreichende thermische Konvektion im Gehäuseinnern, wobei die erwärmte Luft entlang der Gehäuseinnenseite strömen kann, sodass die Wärme über das Gehäuse 4 wirksam nach außen abgeführt werden kann. Alternativ oder als Ergänzung kann die Wandladestation 2 im Inneren, insbesondere die zweite Leiterplatte 48, aktive oder passive Kühleinrichtungen aufweisen (nicht dargestellt), um das Abführen von Wärme von den Leistungselektronik-Einrichtungen 54 zu verstärken. Beispiele für derartige Kühleinrichtungen sind spezielle Kühlkörper mit Rippen oder Heatpipes und dergleichen.

Wie am besten in den Fig. 1 und 3 zu sehen, befinden sich sämtliche Anschlusseinrichtungen 62, 70 für Kabel im linken Endabschnitt des Gehäuses 4 (bzw. im montierten Zustand im unteren Endabschnitt des Gehäuses 4), jedoch beabstandet zur linken Seitenwand, um einen Verdrahtungsraum bereitzustellen. Die durch die Kabeldurchlässe 40, 41 hindurchgeführten Kabel können in diesem Verdrahtungsraum sowohl bei der Fertigung als auch bei der Montage leicht zugänglich verdrahtet bzw. angeschlossen werden. Die Anschlusseinrichtungen 62 und 70 können vorgesehen sein für Stromzufuhrkabel, Stromladekabel, Steuerkabel, Lastabwurfkabel (Load Shedding) sowie für Reservekabel.

Fig. 4 zeigt das Gehäuse 4 mit abgenommener Frontplatte 10 sowie abgenommenem zweiten Deckplatten-Abschnitt 16 (der erste Deckplatten-Abschnitt 14 ist in diesem Beispiel nicht transparent), sodass die Verdrahtung 76 im Anschlussbereich der Wandladestation 2 sichtbar ist. Sämtliche Drähte bzw. Anschlussenden der ankommenden und abgehenden Kabel sind in einfacher Weise zugänglich. Da der erste Deckplatten-Abschnitt 14 noch vorhanden ist, sind die elektrischen Komponenten vor etwaigen Beschädigungen durch das Montage- oder Wartungspersonal ausreichend geschützt. Wie in Fig. 1 zu sehen, erstreckt sich ein Abschnitt der ersten Leiterplatte 46 unter dem plattenförmigen Element 18 in den Verdrahtungsbereich, der sich im Bereich des zweiten Deckplatten-Abschnitts 16 befindet. Dementsprechend befinden sich auch die Anschlusseinrichtungen, die in diesem Abschnitt der ersten Leiterplatte 46 angeordnet sind, im Verdrahtungsbereich. Darüber hinaus erstrecken sich die freien Enden des ersten Schenkels 64 und des zweiten Schenkels 48 der zweiten Leiterplatte 48 durch (nicht gezeigte) Aussparungen in dem plattenförmigen Element 18 in den Verdrahtungsbereich. Dementsprechend befinden sich auch die Anschlusseinrichtungen, die an den freien Enden des ersten Schenkels 64 und des zweiten Schenkels 66 angeordnet sind, im Verdrahtungsbereich. Alternativ erstreckt sich das plattenförmige Element 18 nur bis zur zweiten Leiterplatte 48 nach unten, sodass sich Abschnitte der ersten Leiterplatte 46 und der zweiten Leiterplatte 48 unter dem plattenförmigen Element 18 hindurch in den Verdrahtungsraum erstrecken.

In Fig. 5 ist das Gehäuse 4 komplett verschlossen gezeigt, d. h. es wurden gegenüber der Ansicht in Fig. 4 der zweite Deckplatten-Abschnitt 16 und die Frontplatte 10 aufgebracht. Auf der Rückseite des Gehäuses befinden sich (nicht gezeigte) Einrichtungen zur Anbringung oder Aufhängung der Wandladestation 2 an einer Wand oder Säule.

Mit dem erfindungsgemäßen Gegenstand wird eine Wandladestation bereitgestellt, die einen einfachen und modularen Aufbau aufweist, auf einfache Weise, vorzugsweise automatisiert, herstellbar ist und von Fachpersonal ohne Schwierigkeiten angebracht und angeschlossen werden kann.

### Liste der Bezugszeichen:

- 2: Wandladestation
- 4: Gehäuse
- 6: Gehäuse-Basisteil
- 8: Gehäuse-Abdeckteil
- 10: Frontplatte
- 12: Abdeckplatte
- 14: erster Deckplatten-Abschnitt
- 16: zweiter Deckplatten-Abschnitt
- 18: plattenförmiges Element
- 20: Sichtfenster
- 22: Platte
- 24: Zählereinrichtung
- 26: Anzeigeeinrichtung
- 28: Bodenteil
- 30: umlaufender Wandabschnitt
- 32: vertikaler Wandabschnitt
- 34: geneigter Wandabschnitt
- 36: Randbereich
- 38: Schraubloch
- 40: Kabeldurchlass
- 41: Kabeldurchlass
- 42: Kabelverschraubung
- 43: Zugentlastung
- 44: Kabelverschraubung
- 46: erste Leiterplatte
- 48: zweite Leiterplatte
- 50: dritte Leiterplatte
- 52: Steuereinrichtung
- 54: Leistungselektronik-Einrichtung
- 56: Anzeigeeinrichtung
- 57: Fenster
- 58: RFID-Antenne
- 60: LED-Leiste
- 62: Anschlusseinrichtung
- 64: erster Schenkel
- 66: zweiter Schenkel
- 68: Verbindungsabschnitt
- 70: Anschlusseinrichtung
- 72: Anschlusseinrichtung
- 74: zweiter Verbindungsabschnitt
- 76: Verdrahtung

## Patentansprüche

1. Wandladestation (2) zum Aufladen von Batterien in Elektrofahrzeugen, mit
einem Gehäuse (4) umfassend ein Gehäuse-Basisteil (6) und ein Gehäuse-Abdeckteil (8), wobei das Gehäuse (4) einen Aufnahmeraum für elektrische Komponenten der Wandladestation (2) definiert,
einer ersten Leiterplatte (46), die mindestens eine Einrichtung (52) zur Steuerung der Wandladestation (2) aufweist,
einer zweiten Leiterplatte (48), die mindestens ein Leistungselektronik-Einrichtung (54) aufweist,
einer dritten Leiterplatte (50), die eine Anzeigeeinrichtung (56) und eine RFID-Antenne (58) aufweist, und
einer Zählereinrichtung (24) zur Erfassung des Stromverbrauchs während des Ladevorgangs,
wobei in dem Aufnahmeraum die erste Leiterplatte (46), die zweite Leiterplatte (48) und die dritte Leiterplatte (50) der Reihe nach übereinander beabstandet angeordnet sind,
wobei die zweite Leiterplatte (48) einen ersten Schenkel (64) und einen zum ersten Schenkel (64) parallelen zweiten Schenkel (66) sowie einen ersten Verbindungsabschnitt (68) zwischen dem ersten Schenkel (64) und dem zweiten Schenkel (68) aufweist, sodass sich in Richtung vom Gehäuse-Abdeckteil (8) zum Gehäuse-Basisteil (6) betrachtet ein Abschnitt der ersten Leiterplatte (46) zwischen den Schenkelabschnitten erstreckt, und die dritte Leiterplatte (50) derart angeordnet ist, dass sie den ersten Verbindungsabschnitt (68) der zweiten Leiterplatte (48) überlappt, und
wobei die Zählereinrichtung (24) zwischen dem ersten Schenkel (64) und dem zweiten Schenkel (66) der zweiten Leiterplatte (48) angeordnet ist.

2. Wandladestation (2) nach Anspruch 1, **dadurch gekennzeichnet, dass** die erste Leiterplatte (46) in einem zentralen Bereich des Gehäuses (2) angeordnet ist, sodass sich in Richtung vom Gehäuse-Abdeckteil (8) zum Gehäuse-Basisteil (6) betrachtet ein Abschnitt der ersten Leiterplatte (46) zwischen den Schenkeln (64, 66) der zweiten Leiterplatte (48) erstreckt.

3. Wandladestation (2) nach Anspruch 1 oder 2, **dadurch gekennzeichnet, dass** die Zählereinrichtung (24) an der ersten Leiterplatte (46) angeordnet ist.

4. Wandladestation (2) nach Anspruch 1 oder 2, **dadurch gekennzeichnet, dass** die Zählereinrichtung (24) an dem Gehäuse (2) gehalten ist.

5. Wandladestation (2) nach Anspruch 4, **dadurch gekennzeichnet, dass** die Zähleinrichtung (24) mittels einer Querschiene an dem Gehäuse (2) gehalten ist, wobei die Querschiene im Gehäuseinneren zwischen den Seitenwänden des Gehäuse-Basisteils (6) angeordnet ist.

6. Wandladestation (2) nach einem der vorhergehenden Ansprüche, **dadurch gekennzeichnet, dass** die Zählereinrichtung (24) eine Anzeigeeinrichtung (26) umfasst und das Gehäuse-Abdeckteil (8) ein Sichtfenster (20) umfasst, sodass die Anzeigeeinrichtung (26) von außen sichtbar ist.

7. Wandladestation (2) nach Anspruch 6, **dadurch gekennzeichnet, dass** die Anzeigeeinrichtung (56) ein Fortschrittsbalken ist und wobei in dem Gehäuse-Abdeckteil (8) ein Sichtfenster (57) vorgesehen ist, sodass der Fortschrittsbalken von außen sichtbar ist.

8. Wandladestation (2) nach Anspruch 7, **dadurch gekennzeichnet, dass** der Fortschrittsbalken aus einer LED-Leiste (60) besteht.

9. Wandladestation (2) nach Anspruch 7 oder 8, **dadurch gekennzeichnet, dass** die Anzeigeeinrichtung (56) dazu eingerichtet ist, verschiedene Zustände anzuzeigen.

10. Wandladestation (2) nach einem der vorhergehenden Ansprüche, **dadurch gekennzeichnet, dass** Netz- und BEV-Ladekabel und die Leistungselektronik-Einrichtung (54) sich auf derselben Leiterplatte (48) befinden.

11. Wandladestation (2) nach einem der vorhergehenden Ansprüche, **dadurch gekennzeichnet, dass** an der ersten Leiterplatte (46) Anschlusseinrichtungen (72) vorgesehen sind, und an der zweiten Leiterplatte (48) Anschlusseinrichtungen (70) für Netz- und BEV-Ladekabel vorgesehen sind.

12. Wandladestation (2) nach Anspruch 11, **dadurch gekennzeichnet, dass** die Anschlusseinrichtung (72) der ersten Leiterplatte (46) eine Ethernet-Schnittstelle, eine USB-Schnittstelle und/oder eine Anschlusseinrichtung für eine Stromversorgung aufweist.

13. Wandladestation (2) nach einem der Ansprüche 10 bis 12, **dadurch gekennzeichnet, dass** die Anschlusseinrichtungen (70) für das Netz- und das BEV-Ladekabel jeweils an den freien Enden des ersten Schenkels (64) und/oder des zweiten Schenkels (66) angeordnet sind.

14. Wandladestation (2) nach einem der vorhergehenden Ansprüche, **dadurch gekennzeichnet, dass** an der dritten Leiterplatte (50) eine Anschlusseinrichtung für die Stromversorgung und zum Verbinden mit den Einrichtungen (52) zur Steuerung der Wandladestation (2) vorgesehen sind.
